# EUROPEAN PATENT APPLICATION

(11) **EP 4 615 035 A1**
(43) Date of publication of application: **10.09.2025**
(21) Application number: 23884671.1
(22) Date of filing: 24.10.2023
(51) Int. Cl.: H04W 24/02, H04L 41/0823

(54) **COMMUNICATION METHOD AND APPARATUS**

(30) Priority: 04.11.2022 CN 202211379923
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: Pfenning, Meinig & Partner mbB
(86) International application number: PCT/CN2023/126265
(87) International publication number: WO 2024/093739

(57) **Abstract**

This application discloses a communication method and apparatus. The method includes: A first device may receive first information from a second device. The first information may indicate a correspondence between at least one condition and at least one AI model. When the first device meets a first condition, the first device may use a first AI model corresponding to the first condition, where the first condition is any one of the at least one condition. According to the method, the first device may select a to-be-used AI model based on the correspondence between the at least one condition and the at least one AI model indicated by the second device, so that efficiency of determining and using the AI model by the first device can be improved, and the first device can properly and effectively use the AI model, to improve efficiency of collaboration between the devices.

## Description

### CROSS-REFERENCE TO RELATED APPLICATIONS

This application claims priority to Chinese Patent Application No. 202211379923.3, filed with the China National Intellectual Property Administration on November 4, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Artificial intelligence (artificial intelligence, AI) is a technology in which complex computing is performed by simulating a human brain. With improvement of data storage and computing capabilities, the AI technology is increasingly used. The 3rd generation partnership project (3rd generation partnership project, 3GPP) proposes to apply AI to a new radio (new radio, NR) communication system, to improve network performance and user experience through intelligent collection and data analysis.

However, how to properly and effectively use an AI model in a communication system to improve efficiency of collaboration between devices is a problem that needs to be resolved.

### SUMMARY

This application provides a communication method and apparatus, to improve efficiency of collaboration between devices.

According to a first aspect, an embodiment of this application provides a communication method. The method includes: A first device may receive first information from a second device. The first information may indicate a correspondence between at least one condition and at least one AI model. When the first device meets a first condition, the first device may use a first AI model corresponding to the first condition, where the first condition is any one of the at least one condition.

Optionally, the first device is a terminal device, and the second device is a network device; or the first device is a network device, and the second device is a terminal device.

According to the method, the first device may select a to-be-used AI model based on the correspondence between the at least one condition and the at least one AI model indicated by the second device, so that efficiency of determining and using the AI model by the first device can be improved, and the first device can properly and effectively use the AI model, to improve efficiency of collaboration between the devices.

In addition, in the method, the first device may select the AI model based on the correspondence. In this way, the second device does not need to select the AI model for the first device based on measurement information of the first device or the like, to reduce overheads of obtaining the measurement information of the first device by the second device.

In a possible design, the first condition includes at least one of the following:
signal quality of the first device meets a first signal quality condition;
an application scenario of the first device meets a first application scenario condition;
a resource of the first device meets a first resource condition;
a resource of the second device served by the first device meets a second resource condition;
an area in which the first device is located meets a first area condition;
an area in which the second device served by the first device is located meets a second area condition;
a capability of the first device meets a first capability condition; and
performance of a second AI model currently used by the first device meets a first performance condition.

Optionally, the first signal quality condition includes: the signal quality of the first device is within a first signal quality range;
the first application scenario condition includes: the application scenario of the first device is within a first application scenario range;
the first resource condition includes: the resource of the first device is within a first resource range;
the second resource condition includes: the resource of the second device is within a second resource range;
the first area condition includes: the area in which the first device is located is within a first area range;
the second area condition includes: the area in which the second device is located is within a second area range;
the first capability condition includes: the capability of the first device is within a first capability range; and/or
the first performance condition includes: the performance of the second AI model is within a first performance range.

The design provides a plurality of possible conditions, so that the first device can properly and effectively use an AI model, and implementation is easy.

In a possible design, the first information further indicates a correspondence between at least one exit condition and the at least one AI model. After using the first AI model corresponding to the first condition, when the first device meets a second condition, the first device may stop using the first AI model, where the second condition is a condition that is in the at least one exit condition and that corresponds to the first AI model.

According to the design, the second device may indicate the correspondence between the at least one exit condition and the at least one AI model to the first device. In this way, the first device may properly exit an AI model, so that efficiency of determining and using an AI model by the first device can be improved, and the first device can properly and effectively use the AI model, to improve efficiency of collaboration between the devices.

In a possible design, the second condition includes at least one of the following:
the signal quality of the first device meets a second signal quality condition;
the application scenario of the first device meets a second application scenario condition;
the resource of the first device meets a third resource condition;
the resource of the second device served by the first device meets a fourth resource condition;
the area in which the first device is located meets a third area condition;
the area in which the second device served by the first device is located meets a fourth area condition;
the capability of the first device meets a second capability condition; and
performance of the first AI model meets a second performance condition.

Optionally, the second signal quality condition includes: the signal quality of the first device is within a second signal quality range;
the second application scenario condition includes: the application scenario of the first device is within a second application scenario range;
the third resource condition includes: the resource of the first device is within a third resource range;
the fourth resource condition includes: the resource of the second device is within a fourth resource range;
the third area condition includes: the area in which the first device is located is within a third area range;
the fourth area condition includes: the area in which the second device is located is within a fourth area range;
the second capability condition includes: the capability of the first device is within a second capability range; and/or
the second performance condition includes: the performance of the first AI model is within a second performance range.

The design provides a plurality of possible exit conditions, so that the first device can properly and effectively exit an AI model, and implementation is easy.

In a possible design, when an AI model used by the first device changes, the first device may send second information to the second device, where the second information indicates that the AI model used by the first device changes. According to the design, the first device may notify the second device of information indicating that the AI model changes. In this way, the second device may properly set a correspondence between a condition and an AI model based on the second information fed back by the first device, so that the first device properly selects and uses an AI model, to improve system performance.

In a possible design, the second information includes at least one of the following:
time at which the AI model used by the first device changes;
a condition for triggering a change of the AI model used by the first device;
network performance of the first device and/or AI model performance within first duration before the AI model used by the first device changes and/or within second duration after the AI model used by the first device changes; and
indication information of the AI model used by the first device before the AI model used by the first device changes and/or indication information of an AI model used by the first device after the AI model used by the first device changes.

According to the design, the first device can flexibly notify the second device of information indicating that the AI model changes.

In a possible design, if the first device is the network device, when the second device is handed over from the first device to a third device, the first device may send the first information to the third device. The second device may be the terminal device, the first device may be a source network device of the terminal device, and the third device may be a destination network device of the terminal device. According to the design, when the terminal device is handed over from the source network device to the destination network device, the source network device may send the first information from the terminal device to the destination network device. In this way, the destination network device may also use an AI model based on a correspondence between a condition and an AI model provided by the terminal device.

In a possible design, before receiving the first information from the second device, the first device may send third information to the second device, where the third information indicates the capability of the first device and/or the application scenario of the first device, and the third information is used to determine the first information. According to the design, the second device may properly determine a correspondence between an AI model and each condition.

According to a second aspect, an embodiment of this application provides a communication method. The method includes: A second device may obtain first information, where the first information indicates a correspondence between at least one condition and at least one AI model. Then, the second device may send the first information to a first device.

Optionally, the first device is a terminal device, and the second device is a network device; or the first device is a network device, and the second device is a terminal device.

According to the method, the second device may send, to the first device, the first information indicating the correspondence between the at least one condition and the at least one AI model. In this way, the first device may select a to-be-used AI model based on the correspondence, so that efficiency of determining and using the AI model by the first device can be improved, and the first device can properly and effectively use the AI model, to improve efficiency of collaboration between the devices.

In a possible design, any one of the at least one condition includes at least one of the following:
signal quality of the first device meets a first signal quality condition;
an application scenario of the first device meets a first application scenario condition;
a resource of the first device meets a first resource condition;
a resource of the second device served by the first device meets a second resource condition;
an area in which the first device is located meets a first area condition;
an area in which the second device served by the first device is located meets a second area condition;
a capability of the first device meets a first capability condition; and
performance of a second AI model currently used by the first device meets a first performance condition.

Optionally, the first signal quality condition includes: the signal quality of the first device is within a first signal quality range;
the first application scenario condition includes: the application scenario of the first device is within a first application scenario range;
the first resource condition includes: the resource of the first device is within a first resource range;
the second resource condition includes: the resource of the second device is within a second resource range;
the first area condition includes: the area in which the first device is located is within a first area range;
the second area condition includes: the area in which the second device is located is within a second area range;
the first capability condition includes: the capability of the first device is within a first capability range; and/or
the first performance condition includes: the performance of the second AI model is within a first performance range.

The design provides a plurality of possible conditions, so that the first device can properly and effectively use an AI model, and implementation is easy.

In a possible design, the first information further indicates a correspondence between at least one exit condition and the at least one AI model. In this way, the first device may properly exit an AI model, so that efficiency of determining and using an AI model by the first device can be improved, and the first device can properly and effectively use the AI model, to improve efficiency of collaboration between the devices.

In a possible design, a second condition is one of the at least one exit condition, and the second condition includes at least one of the following:
the signal quality of the first device meets a second signal quality condition;
the application scenario of the first device meets a second application scenario condition;
the resource of the first device meets a third resource condition;
the resource of the second device served by the first device meets a fourth resource condition;
the area in which the first device is located meets a third area condition;
the area in which the second device served by the first device is located meets a fourth area condition;
the capability of the first device meets a second capability condition; and
performance of the first AI model meets a second performance condition.

Optionally, the second signal quality condition includes: the signal quality of the first device is within a second signal quality range;
the second application scenario condition includes: the application scenario of the first device is within a second application scenario range;
the third resource condition includes: the resource of the first device is within a third resource range;
the fourth resource condition includes: the resource of the second device is within a fourth resource range;
the third area condition includes: the area in which the first device is located is within a third area range;
the fourth area condition includes: the area in which the second device is located is within a fourth area range;
the second capability condition includes: the capability of the first device is within a second capability range; and/or
the second performance condition includes: the performance of the first AI model is within a second performance range.

The design provides a plurality of possible exit conditions, so that the first device can properly and effectively exit an AI model, and implementation is easy.

In a possible design, the second device may receive second information from the first device, where the second information indicates that an AI model used by the first device changes. According to the design, the first device may notify the second device of information indicating that the AI model changes. In this way, the second device may properly set a correspondence between a condition and an AI model based on the second information fed back by the first device, so that the first device properly selects and uses an AI model, to improve system performance.

In a possible design, the second information may include at least one of the following:
time at which the AI model used by the first device changes;
a condition for triggering a change of the AI model used by the first device;
network performance of the first device and/or AI model performance within first duration before the AI model used by the first device changes and/or within second duration after the AI model used by the first device changes; and
indication information of the AI model used by the first device before the AI model used by the first device changes and/or indication information of an AI model used by the first device after the AI model used by the first device changes.

According to the design, the first device can flexibly notify the second device of information indicating that the AI model changes.

In a possible design, if the second device is the network device, when the first device is handed over from the second device to a fourth device, the second device may send the first information to the fourth device. The first device may be the terminal device, the second device may be a source network device of the terminal device, and the fourth device may be a destination network device of the terminal device. According to the design, when the terminal device is handed over from the source network device to the destination network device, the source network device may send the first information to the destination network device. In this way, the destination network device may also obtain a correspondence between a condition and an AI model provided by the source network device, so that the destination network device may cooperate with the terminal device that performs an operation by using the correspondence.

In a possible design, before obtaining the first information, the second device may receive third information from the first device, where the third information indicates the capability of the first device and/or the application scenario of the first device, and the third information is used to determine the first information. According to the design, the second device may properly determine a correspondence between an AI model and each condition based on the third information.

According to a third aspect, an embodiment of this application provides a communication method. The method includes: A first device may receive fourth information from a second device, where the fourth information includes configuration information of at least one AI model. The first device may use a third AI model after receiving fifth information from the second device. The fifth information includes indication information of the third AI model, and the third AI model is one of the at least one AI model.

According to the method, after sending the configuration information of the at least one AI model to the first device, the second device may indicate, by using the indication information of the third AI model, the first device to use the third AI model. Therefore, overheads and time needed for indicating the first device to use the third AI model can be reduced, and efficiency of collaboration between the devices can be further improved.

In a possible design, the indication information of the third AI model is an index of the third AI model. According to the design, an AI model is indicated by using an index of the AI model. In this way, even if a third party obtains an index, the third party does not know an AI model corresponding to the index, to improve security.

According to a fourth aspect, an embodiment of this application provides a communication method. The method includes: A second device sends fourth information to a first device, where the fourth information includes configuration information of at least one AI model. Then, the second device may send fifth information to the first device, where the fifth information includes indication information of a third AI model, the third AI model is one of the at least one AI model, and the fifth information indicates the first device to use the third AI model.

According to the method, after sending the configuration information of the at least one AI model to the first device, the second device may indicate, by using the indication information of the third AI model, the first device to use the third AI model. Therefore, overheads and time needed for indicating the first device to use the third AI model can be reduced, and efficiency of collaboration between the devices can be further improved.

In a possible design, the indication information of the third AI model is an index of the third AI model. According to the design, an AI model is indicated by using an index of the AI model. In this way, even if a third party obtains an index, the third party does not know an AI model corresponding to the index, to improve security.

According to a fifth aspect, an embodiment of this application provides a communication apparatus, including units configured to perform the steps in any one of the foregoing aspects.

According to a sixth aspect, an embodiment of this application provides a communication apparatus, including at least one processing element and at least one storage element. The at least one storage element is configured to store a program and data, and the at least one processing element is configured to read and execute the program and the data that are stored in the storage element, so that the method according to any one of the foregoing aspects of this application is implemented.

According to a seventh aspect, an embodiment of this application provides a communication system, including a first device configured to perform the method according to the first aspect, and a second device configured to perform the method according to the second aspect.

According to an eighth aspect, an embodiment of this application provides a communication system, including a first device configured to perform the method according to the third aspect, and a second device configured to perform the method according to the fourth aspect.

According to a ninth aspect, an embodiment of this application further provides a computer program. When the computer program is run on a computer, the computer is enabled to perform the method according to any one of the foregoing aspects.

According to a tenth aspect, an embodiment of this application further provides a computer-readable storage medium. The computer-readable storage medium stores a computer program. When the computer program is executed by a computer, the computer is enabled to perform the method according to any one of the foregoing aspects.

According to an eleventh aspect, an embodiment of this application further provides a chip. The chip is configured to read a computer program stored in a memory, to perform the method according to any one of the foregoing aspects.

According to a twelfth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include the chip and another discrete component.

For technical effects that can be achieved in any one of the fifth aspect to the twelfth aspect, refer to the descriptions of the technical effects that can be achieved in any possible design in any one of the first aspect to the fourth aspect. Repeated parts are not described.

### BRIEF DESCRIPTION OF DRAWINGS

FIG. 1 is a diagram of an architecture of a communication system to which an embodiment of this application is applied;
FIG. 2 is a schematic flowchart of a first communication method according to an embodiment of this application;
FIG. 3 is a schematic flowchart of a second communication method according to an embodiment of this application;
FIG. 4 is a schematic flowchart of a third communication method according to an embodiment of this application;
FIG. 5 is a schematic flowchart of a fourth communication method according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

The following describes in detail embodiments of this application with reference to the accompanying drawings of the specification.

Embodiments of this application may be applied to various mobile communication systems, for example, a new radio (new radio, NR) system, a global system of mobile communications (global system of mobile communications, GSM), a long term evolution (long term evolution, LTE) system, a future communication system, and other communication systems. This is not limited herein.

In embodiments of this application, interaction among a terminal device, an access network device, and a core network device is used as an example for description. It should be noted that a method provided in embodiments of this application not only may be applied to interaction between the terminal device and a network side, but also may be applied to interaction between any two devices. This is not limited in embodiments of this application.

In embodiments of this application, the terminal device may provide a voice and/or data connectivity service for a user. The terminal device may be a wireless terminal device or a wireless terminal device. The wireless terminal device is a device having a wireless transceiver function, for example, a device having a wireless connection function or a device connected to a wireless modulator. The terminal device may be deployed on land, including an indoor device, an outdoor device, a handheld device, or a vehicle-mounted device, may be deployed on a water surface (for example, on a ship), or may be deployed in the air (for example, on aircraft, a balloon, or a satellite). The terminal device may also be referred to as user equipment (user equipment, UE), a subscriber unit (subscriber unit, SU), a subscriber station (subscriber station, SS), a mobile station (mobile station, MB), a mobile station (Mobile), a remote station (remote station, RS), an access point (access point, AP), a remote terminal (remote terminal, RT), an access terminal (access terminal, AT), a user terminal (user terminal, UT), a user agent (user agent, UA), or a terminal device (user device, UD).

For example, the terminal device may be a mobile phone, a tablet computer, a notebook computer, a palmtop computer, a mobile internet device (mobile internet device, MID), a mobile cellular phone, a cordless phone, a personal digital assistant (personal digital assistant, PDA), customer-premises equipment (customer-premises equipment, CPE), a smart point of sale (point of sale, POS) machine, a personal communication service (personal communication service, PCS) phone, a session initiation protocol (session initiation protocol, SIP) phone, a wireless local loop (wireless local loop, WLL) station, a wearable device (for example, a smart watch, a smart band, or a pedometer), a vehicle-mounted device (for example, a car, a bicycle, an electric vehicle, an airplane, a ship, a train, and a high-speed rail), a virtual reality (virtual reality, VR) device, an augmented reality (augmented reality, AR) device, a wireless terminal in industrial control, a smart home device (for example, a refrigerator, a television, an air conditioner, or an electric meter), an intelligent robot, a workshop device, a wireless terminal in self driving, a wireless terminal in remote surgery, a wireless terminal in a smart grid (smart grid), a wireless terminal in transportation security, a wireless terminal in a smart city, a smartphone, a notebook computer, a tablet computer, a wireless data card, a wireless modulator demodulator (modulator demodulator, Modem), a flight device (for example, an intelligent robot, a hot air balloon, an uncrewed aerial vehicle, or an airplane), a home appliance, a vehicle, a tool device, a service device, a service facility, or the like.

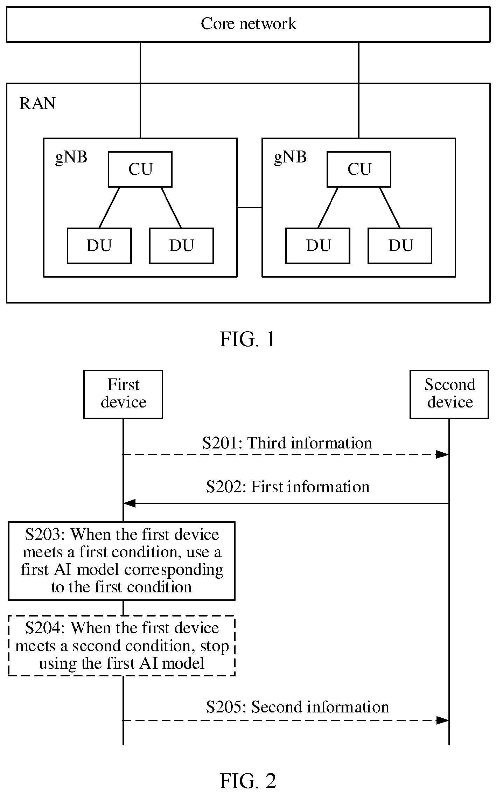

A network device in embodiments of this application may be a base station (for example, a next generation NodeB (generation NodeB, gNB)) in a radio access network (radio access network, RAN). As shown in FIG. 1, the base station may be an architecture in which a central unit (central unit, CU) is separated from a distributed unit (distributed unit, DU). The RAN may be connected to a core network (for example, may be a long term evolution (long term evolution, LTE) core network, or may be a 5G core network). It may be understood that the base station is divided into the CU and the DU from a perspective of a logical function. The CU and the DU may be physically separated or deployed together. A plurality of DUs may share one CU. One DU may alternatively be connected to a plurality of CUs (not shown in the figure). The CU and the DU may be connected through an interface, for example, an F1 interface. The CU and the DU may be divided based on a protocol layer of a wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. The division manner is merely an example, and division into the CU and the DU may alternatively be performed in another manner. For example, in comparison with the foregoing manner, the CU or the DU may have functions of more protocol layers. For another example, the CU or the DU may have some processing functions of the protocol layers in the foregoing division manner. In a design, some functions of the RLC layer and functions of protocol layers above the RLC layer are set on the CU, and remaining functions of the RLC layer and functions of protocol layers below the RLC layer are set on the DU. In another design, functions of the CU or the DU may alternatively be obtained through division based on a service type or another system requirement. For example, division is performed based on a delay, a function whose processing time needs to satisfy a delay requirement is set on the DU, and a function whose processing time does not need to satisfy the delay requirement is set on the CU. In another design, the CU may alternatively have one or more functions of the core network. One or more CUs may be disposed together or separately. For example, the CUs may be disposed on a network side for ease of centralized management. The DU may have a plurality of radio frequency functions, or the radio frequency functions may be set remotely.

The functions of the CU may be implemented by one entity, or may be implemented by different entities. For example, the functions of the CU may be further divided. For example, a control plane (control plane, CP) and a user plane (user plane, UP) are separated, that is, a central unit-control plane (central unit-control plane, CU-CP) node or a central unit user plane (central unit-user plane, CU-UP) node is separated. For example, the CU-CP and the CU-UP may be implemented by different functional entities, and are connected through an E1 interface. The CU-CP and the CU-UP may be coupled to the DU, to jointly perform functions of the base station. Optionally, the control plane CU-CP of the CU may be further divided into a CU-CP 1 and a CU-CP 2. The CU-CP 1 is configured to implement a radio resource management function, and the CU-CP 2 is configured to implement an RRC function and a packet data convergence protocol control (packet data convergence protocol control, PDCP-C) function (namely, a basic function of control plane signaling at the PDCP layer).

For ease of understanding of this application, the following describes some nouns or terms in this application.

### 1. AI application scenario (use case)

The AI application scenario includes but is not limited to at least one of the following: energy saving (energy saving), load balancing (load balancing), mobility optimization (mobility optimization), channel status information reference signal (channel status information reference signal, CSI-RS) feedback enhancement (CSI-RS feedback enhancement), beam management enhancement (beam management enhancement), and positioning enhancement (positioning accuracy enhancement). Descriptions are separately provided below.

### (1) Energy saving:

A network device may predict load of the network device based on information such as load, energy consumption, and energy efficiency of the network device and a neighboring cell, and information such as a trajectory and a measurement result of a terminal device. The network device may take an energy saving measures in a timely and suitable manner based on a prediction result without affecting network coverage and user access. The energy saving measure may include at least one of the following: deactivating a cell, shutting down a carrier, shutting down a channel, shutting down a slot, decreasing transmit power, and the like.

### (2) Load balancing:

A network device may predict load of the network device based on information such as load, energy consumption, and energy efficiency of the network device and a neighboring cell, and information such as a trajectory and a measurement result of a terminal device. The network device may hand over some terminal devices to the neighboring cell or hand over some terminal devices served by the neighboring cell to a current cell based on a prediction result, so that load of network devices in a network is close to each other. This avoids a case in which load of some network devices is excessively heavy, affecting services of the terminal devices, and resources of other network devices are in an idle state.

### (3) Mobility optimization:

A network device may predict a future trajectory of a terminal device based on historical trajectory information of the terminal device and measurement information of the terminal device. The network device may determine, in advance based on a prediction result, whether the terminal device needs to be handed over, configure, in advance, information needed for handover for the terminal device that needs to be handed over, and notify a target cell to prepare an access resource for the terminal device, so that a delay of the terminal device in a handover process can be reduced, and a handover success rate of the terminal device can be improved.

### (4) CSI-RS feedback enhancement:

A network device may provide an encoder and a quantization tool for a terminal device based on information such as a capability of the terminal device. After compressing and quantizing a CSI-RS through the encoder and the quantization tool, the terminal device may send the CSI-RS to the network device. The network device may determine channel quality of the terminal device based on the CSI-RS.

### (5) Beam management enhancement:

A network device may obtain full beam scanning results from a plurality of terminal devices, and obtain a sparse scanning matrix through training based on the full beam scanning results. Then, after sending the sparse scanning matrix to a terminal device a, the network device may obtain a sparse scanning result from the terminal device a, and determine an optimal CSI-RS beam of the terminal device a based on the sparse scanning result.

### (6) Positioning enhancement:

The positioning enhancement is used to improve positioning accuracy. The positioning enhancement may include at least one of the following: positioning enhancement based on an access network device, positioning enhancement based on a location management function network element, and positioning enhancement based on a terminal device.

### 2. AI model

The AI model is a specific implementation of an AI function, and may represent a mapping relationship between an input and an output of the model. The AI model may be a neural network, a linear regression model, a decision tree model, a support vector machine (support vector machine, SVM), a Bayesian network, a Q-learning model, another machine learning model, or the like. The AI function may include at least one of the following: data collection (collection of training data and/or inference data), data preprocessing, model training (also referred to as model learning), model information release (configuration of model information), model verification, model inference, or inference result release. Inference may also be referred to as prediction.

An AI module is a module having a machine learning computing capability and configured to implement the AI model. In a communication system, the AI module may be located in operation, administration and maintenance (operation administration and maintenance, OAM), may be located in a network device, may be located in a terminal device, or may be a separate control layer, for example, an AI control layer (AI control layer, AIC).

Main functions of the AI module may include: performing a series of AI computing such as AI model establishment, training approximation, and reinforcement learning based on input data. In the communication system, the input data may include network running data provided by the network device or monitored by an OAM, for example, data such as network load and channel quality.

A trained model provided by the AI module has a prediction function for a network change on a RAN side, and may be used for load prediction, trajectory prediction of the terminal device, and/or the like. In addition, the AI module may further infer, by using the trained model, an energy saving policy, a mobility optimization policy, and/or the like based on a result of predicting RAN network performance.

When the AI module is located in the OAM, the AI module may communicate with the network device through a northbound interface. When the AI module is located in a gNB or a CU, the AI module may communicate with another device through an F1 interface, an Xn interface, a Uu interface, or the like. When the AI module is used as an independent network entity, the AI module may establish a communication link from the AI module to the OAM and/or the RAN side, where the communication link may be a wired link or a wireless link.

In addition, when a CP and a UP of the CU are separated, a CU-CP may be configured to receive the AI model and perform functions such as AI inference and policy generation. When the CU-CP includes a CU-CP 1 and a CU-CP 2, the CU-CP 1 may be configured to receive the AI model, perform a function such as AI inference, generate interaction signaling, and send the interaction signaling through the CU-CP 2.

The terminal device may support a plurality of AI models. The network device may determine, based on information such as a measurement result of the terminal device, an AI model that should be currently used by the terminal device, and indicate the terminal device to use the AI model. Because the terminal device may use different AI models in different cases, the network device needs to obtain, from the terminal device in time, information used to determine an AI model. Consequently, overheads are high, a delay is long, and efficiency of collaboration between the devices is low.

To resolve the technical problems, an embodiment of this application provides a communication method. The method may be applied to the communication system shown in FIG. 1. The following specifically describes a procedure of the method with reference to a flowchart shown in FIG. 2.

S201: A first device sends third information to a second device. Correspondingly, the second device receives the third information from the first device.

Optionally, the first device is a terminal device, and the second device is a network device; or the first device is a network device, and the second device is a terminal device.

The third information may indicate a capability of the first device and/or an application scenario of the first device. The third information may include the capability of the first device and/or the application scenario of the first device, or may include information that has a correspondence with the capability of the first device and/or the application scenario of the first device.

When the first device is the terminal device, the capability of the first device includes but is not limited to at least one of the following:
1. Buffer capability of the terminal device, for example, if a buffer size of the terminal device is 50 megabytes (MB), it indicates that the terminal device can store an AI model whose capacity size is 50 MB.
2. AI computing capability of the terminal device, for example, the AI computing capability of the terminal device is 1 tera (Tera, T, namely, 10¹²) floating-point operations per second (Floating-point operations per second, FLPS).
3. Power of the terminal device, for example, an available power of the terminal device is 2000 milliamperes.
4. AI model information of the terminal device, for example, a software library (for example, a tensor flow system (Tensflow)) configured to implement an AI function in the terminal device, and for another example, an AI model format (for example, open neural network exchange (open neural network exchange, ONNX)) supported by the terminal device.
5. Indication information of an AI model that has been locally stored in the terminal device, where the indication information may be information that has a correspondence with the AI model. For example, the indication information may be a model identifier (identifier, ID). The model ID may be a bit stream including a plurality of bits. The bit stream may not only indicate the AI model, but also indicate one or more of vendor information, version information, compilation platform information, and the like of the AI model. For another example, the indication information is an index of the AI model, and the index corresponds to an ID of the AI model.
6. Performance that is of an AI model and that is expected by the terminal device, for example, a target value that the terminal device expects a throughput to reach after using the AI model, and for another example, the terminal device expects that prediction accuracy is higher than 95% through the AI model.

When the first device is the network device, the capability of the first device includes but is not limited to at least one of the following:
1. Buffer capability of the network device, for example, if a buffer size of the network device is 50 MB, it indicates that the network device can store an AI model whose capacity size is 50 MB.
2. AI computing capability of the network device, for example, the AI computing capability of the network device is 1T FLPS.
3. AI model information of the network device, for example, a software library (for example, Tensflow) configured to implement an AI function in the network device, and for another example, an AI model format (for example, ONNX) supported by the network device.
4. Indication information of an AI model that has been locally stored in the network device, where the indication information may be information that has a correspondence with the AI model. For example, the indication information may be a model ID. The model ID may be a bit stream including a plurality of bits. The bit stream may not only indicate the AI model, but also indicate one or more of vendor information, version information, compilation platform information, and the like of the AI model. For another example, the indication information is an index of the AI model, and the index corresponds to an ID of the AI model.
5. Performance that is of an AI model and that is expected by the network device, for example, a target value that the network device expects a throughput to reach after using the AI model, and for another example, the network device expects that prediction accuracy is higher than 95% through the AI model.

The application scenario of the first device includes but is not limited to at least one of the following: energy saving, load balancing, mobility optimization, CSI-RS feedback enhancement, beam management enhancement, and positioning enhancement.

In this application, the third information may be carried in an existing message, or may be carried in a new message.

The first device may actively send the third information to the second device, or may send the third information to the second device based on a request of the second device. When the first device actively sends the third information to the second device, the first device may send the third information based on a specified periodicity, or may send the third information to the second device based on event triggering. The specified periodicity may be predefined, or may be obtained by the first device from the second device. A triggering event may be that the capability and/or the application scenario of the first device change/changes.

In this application, S201 is an optional step.

S202: The second device sends first information to the first device. Correspondingly, the first device receives the first information from the second device.

The first information may indicate a correspondence between at least one condition and at least one AI model.

In some possible manners, the at least one condition and the at least one AI model may be in a one-to-one relationship. For example, the at least one condition includes a condition 1 and a condition 2, the at least one AI model includes an AI model 1 and an AI model 2, the condition 1 corresponds to the AI model 1, and the condition 2 corresponds to the AI model 2.

In some other possible manners, the at least one condition and the at least one AI model may be in a many-to-one relationship. For example, the at least one condition includes a condition 1 to a condition 4, the at least one AI model includes an AI model 1 and an AI model 2, the condition 1 and the condition 4 correspond to the AI model 1, and the condition 2 and the condition 3 correspond to the AI model 2.

A first condition is any one of the at least one condition, and the first condition corresponds to a first AI model in the at least one AI model. Optionally, the first condition may include one or more conditions shown in Table 1.

**Table 1**

| First AI model | First condition (entry condition or change condition) |
|---|---|
| Model ID and/or model content of the first AI model | Signal quality of the first device meets a first signal quality condition. |
| | An application scenario of the first device meets a first application scenario condition. |
| | A resource of the first device meets a first resource condition. |
| | A resource of the second device served by the first device meets a second resource condition. |
| | An area in which the first device is located meets a first area condition. |
| | An area in which the second device served by the first device is located meets a second area condition. |
| | A capability of the first device meets a first capability condition. |
| | Performance of a second AI model currently used by the first device meets a first performance condition. |

The following separately describes each condition that may be included in the first condition.

The first signal quality condition may include: The signal quality of the first device is within a first signal quality range. The signal quality of a first signal includes at least one of the following: a strength that is of a signal from the second device and that is detected by the first device, a throughput of the first device, a transmission delay that is of a signal from the second device and that is detected by the first device, a packet error rate that is of a signal from the second device and that is detected by the first device, and a call drop rate of the first device. For example, if the signal strength of the first device continuously exceeds a first signal quality threshold (for example, 100 decibel-milliwatts (decibel relative to one milliwatt, dBm)) within n consecutive seconds, and a maximum throughput of the first device is less than a first throughput threshold, the first device may use the AI model 1, where n is a positive integer. For another example, if the transmission delay that is of the signal from the second device and that is detected by the first device is greater than 80 milliseconds (ms), the first device may switch from the AI model 1 to the AI model 2. For still another example, if the packet error rate that is of the signal from the second device and that is detected by the first device and/or the call drop rate of the first device are/is greater than 20%, the first device may switch from the AI model 1 to the AI model 2. For another example, if the strength that is of the signal from the second device and that is detected by the first device is greater than -100 dBm, and the call drop rate of the first device is greater than 20%, the first device may use the AI model 1.

The first application scenario condition includes: The application scenario of the first device is within a first application scenario range. The first application scenario condition may indicate a correspondence between an application scenario or an application sub-scenario and an AI model. For example, CSI-RS feedback enhancement may correspond to an AI model a1 and an AI model a2, and beam management enhancement may correspond to an AI model a3 and an AI model a4. In the beam management enhancement scenario, when the first device and the second device communicate through a beam pair 1, the first device may use the AI model a3. When the first device and the second device communicate through a beam pair 2, the first device may use the AI model a4.

The first resource condition includes: The resource of the first device is within a first resource range. Optionally, when the first device is the terminal device, the first condition may include the first resource condition. In this case, there may be a correspondence between uplink and downlink time-frequency resources used by the terminal device and an AI model. For example, when a center frequency of a bandwidth part (bandwidth part, BWP) used by the terminal device is a first frequency and/or a bandwidth used by the terminal device is a first bandwidth, the terminal device may use an AI model b1.

The second resource condition includes: The resource of the second device is within a second resource range. Optionally, when the first device is the network device and the second device is the terminal device, the first condition may include the second resource condition. The second resource range may be the same as or different from the first resource range. For example, when a center frequency of a BWP used by the terminal device is a first frequency and/or a bandwidth used by the terminal device is a first bandwidth, the network device may use an AI model b1.

The first area condition includes: The area in which the first device is located is within a first area range. Optionally, when the first device is the terminal device, the first condition may include the first area condition.

In a possible manner, an area in which the terminal device is located may be a geographical location area in which the terminal device is located, and the geographical location area may be determined based on information such as an administrative region, longitude and latitude, and/or a height. For example, if the terminal device is located in a city A, the terminal device may use an AI model c1 corresponding to the city A.

In some other possible manners, the area in which the terminal device is located may be determined by using an accessed public land mobile network (public land mobile network, PLMN) and/or a cell global identifier (Cell Global Identifier, CGI) of an accessed cell. For example, if the terminal device accesses a PLMN 1, the terminal device may use an AI model c2 corresponding to the PLMN 1. For another example, if an identifier of a cell accessed by the terminal device is a CGI 1, the terminal device may use an AI model c3 corresponding to the CGI 1.

The second area condition includes: The area in which the second device is located is within a second area range. Optionally, when the first device is the network device and the second device is the terminal device, the first condition may include the second area condition. The second area range may be the same as or different from the first area range.

In a possible manner, an area in which the terminal device is located may be a geographical location area in which the terminal device is located, and the geographical location area may be determined based on information such as an administrative region, longitude and latitude, and/or a height. For example, if the terminal device is located in a city A, the network device may use an AI model c1 corresponding to the city A. The area in which the terminal device is located may be sent by the terminal device to the network device.

In some other possible manners, the area in which the terminal device is located may be determined by using an accessed public land mobile network (public land mobile network, PLMN) and/or a cell global identifier (Cell Global Identifier, CGI) of an accessed cell. For example, if the terminal device accesses a PLMN 1, the network device may use an AI model c2 corresponding to the PLMN 1. For another example, if an identifier of a cell accessed by the terminal device is a CGI 1, the network device may use an AI model c3 corresponding to the CGI 1.

The first capability condition includes: The capability of the first device is within a first capability range. For example, the capability of the first device may include a remaining power of the first device. When the remaining power of the first device is less than a first power threshold, the first device may use an AI model d1. For another example, the capability of the first device includes a computing capability of the first device. When a computing rate of the first device is less than a first rate threshold, the first device may use an AI model d2.

The first performance condition includes: The performance of the second AI model is within a first performance range. The second AI model may be an AI model currently used by the first device. The performance of the second AI model may include prediction accuracy of the second AI model and/or network performance obtained after network optimization is performed by using a prediction result of the second AI model. For example, when the prediction accuracy (for example, a probability that a predicted optimal beam is an actual optimal beam in the beam management enhancement) of the second AI model is less than a first accuracy threshold (for example, the prediction accuracy of the second AI model is less than 95% within 1 minute), the first device may switch the currently used AI model to the first AI model. For another example, if results of M consecutive predictions of the second AI model are all inaccurate, where M is a positive integer, for example, in the beam management enhancement, if optimal beams predicted by the second AI model for five consecutive times are not actual optimal beams, the first device may switch the currently used AI model to the first AI model. For still another example, when the network performance obtained after network optimization is performed by using the prediction result of the second AI model does not reach an expected performance objective, the first device may switch the currently used AI model to the first AI model. For example, the expected performance objective is to increase the throughput of the first device to X. If the throughput of the first device is less than X after network optimization is performed by using the prediction result of the second AI model, the first device may switch the currently used AI model to the first AI model.

When the first device meets the first condition, the first device may use the first AI model corresponding to the first condition. Therefore, the first condition may be referred to as an entry condition of the first AI model. If the first device meets the first condition, the first device changes from using the second AI model to using the first AI model, and the first condition may also be referred to as a change condition.

According to the method, the second device may indicate the correspondence between the at least one condition and the at least one AI model to the first device. In this way, the first device may select a to-be-used AI model based on the correspondence, so that efficiency of determining and using the AI model by the first device can be improved, and the first device can properly and effectively use the AI model, to improve efficiency of collaboration between the devices.

In addition, in the method, the first device may select the AI model based on the correspondence. In this way, the second device does not need to select the AI model for the first device based on measurement information of the first device or the like, to reduce overheads of obtaining the measurement information of the first device by the second device.

Optionally, the second device may determine the correspondence between the at least one condition and the at least one AI model based on at least one of the following: the capability of the first device, the application scenario of the first device, the signal quality of the first device, and a requirement of the second device. The requirement of the second device may include an AI model and a target application scenario that exist in the second device.

The second device may determine the at least one AI model based on one or more of the capability of the first device, the application scenario of the first device, and the requirement of the second device. For example, when the buffer capability of the first device is 50 MB, the second device may determine that a size of any one of the at least one AI model is less than 50 MB. For another example, when the terminal device may support an AI model in an ONNX format, the second device may determine that a format of any one of the at least one AI model is ONNX. For another example, when the application scenario or the target application scenario of the first device includes beam management enhancement, the second device may determine that the at least one AI includes an AI model used for the beam management enhancement. For still another example, the at least one AI model includes the AI model that exists in the second device.

The second device may determine, based on one or more of performance and overheads of the at least one AI model and the signal quality of the first device, a condition corresponding to the at least one AI model, that is, determine the correspondence between at least one condition and at least one AI model. For example, when a computing capability needed by an AI model 1 is 0.5T FLPS, and a computing capability needed by an AI model 2 is 0.3T FLPS, the second device may determine that a condition corresponding to the AI model 1 includes that the computing capability of the first device is greater than or equal to 0.5T FLPS (for example, the computing capability of the first device is 0.4T FLPS), and a condition corresponding to the AI model 1 includes that the computing capability of the first device is greater than or equal to 0.3T FLPS (for example, the computing capability of the first device is 0.4T FLPS). For another example, if the strength that is of the signal from the second device and that is detected by the first device ranges from a dBm to b dBm, the second device may determine that the condition corresponding to the AI model 1 includes that the strength that is of the signal from the second device and that is detected by the first device is greater than c dBm, where c is greater than or equal to a and less than or equal to b, and a, b, and c are positive integers.

Optionally, the first information may further include configuration information of the at least one AI model. The following uses the first AI model as an example for description. As shown in Table 1, configuration information of the first AI model may include the model ID and/or model content information of the first AI model. For example, when a format of an AI model in the first device is the ONNX format or an AI model format defined in the 3GPP, the configuration information of the first AI model may include specific content of the first AI model and the model ID of the first model. For the specific content of the model ID, refer to the descriptions of the model ID in S201. The specific content of the first AI model may include the first AI model and a submodel of the first AI model.

Optionally, the configuration information of the first AI model further includes an index of the first AI model. For example, if the second device learns that the model content information of the first AI model is locally stored in the first device, the configuration information of the first AI model may include the model ID and the index of the first AI model. The index of the first AI model indicates the first AI model. For example, the index of the first AI model may correspond to the model ID of the first AI model.

The index of the first AI model may include at least one of the following: an index in a model list and/or an index in a model sublist. The index in the model list may indicate the first AI model, and the index in the model sublist may indicate a subversion of the first AI model. For example, as shown in Table 2, an index 1 may indicate an AI model whose model ID is XXX, an index 1-1 may indicate an AI model whose model ID is XXXX1, and an index 1-2 may indicate an AI model whose model ID is XXXX2. The AI model whose model ID is XXXX1 and the AI model whose model ID is XXXX1 are subversions of the AI model whose model ID is XXX.

**Table 2**

| Model list | Model sublist | Model ID |
|---|---|---|
| 1 | 1-1, 1-2 | XXX, XXXX1, XXXX2 |

In addition, indexes that are in the model list and the model sublist and that correspond to different application scenarios may be separately numbered, or may be consecutively numbered. For example, indexes that are in the model list and that correspond to the beam management enhancement are 1 and 2, and indexes that are in the model list and that correspond to the CSI-RS feedback enhancement are 3 and 4.

Optionally, the first information further includes minimum execution time of each of the at least one AI model. For example, the minimum execution time of the first AI model may be 5 minutes. According to the method, frequent switching of the first device between different AI models can be avoided, thereby avoiding performance jitter and degradation caused by frequent switching between the AI models.

Optionally, the first information may further indicate a correspondence between at least one exit condition and the at least one AI model. The at least one exit condition and the at least one AI model may be in a one-to-one relationship, or may be in a many-to-one relationship.

The second condition may be a condition that is in the at least one exit condition and that corresponds to the first AI model. The following uses the second condition as an example to describe the at least one exit condition. Optionally, the second condition may include one or more conditions in Table 3.

**Table 3**

| First AI model | Second condition (exit condition) |
|---|---|
| Model ID and/or model content of the first AI model | Signal quality of the first device meets a second signal quality condition. |
| | An application scenario of the first device meets a second application scenario condition. |
| | A resource of the first device meets a third resource condition. |
| | A resource of the second device served by the first device meets a fourth resource condition. |
| | An area in which the first device is located meets a third area condition. |
| | An area in which the second device served by the first device is located meets a fourth area condition. |
| | A capability of the first device meets a second capability condition. |
| | Performance of the first AI model meets a second performance condition. |

The following separately describes each condition that may be included in the second condition.

The second signal quality condition includes: The signal quality of the first device is within a second signal quality range. For the signal quality of the first device, refer to the descriptions of the first signal quality condition. Details are not described herein again. The second signal quality range is different from the first signal quality range. For example, if the signal strength of the first device is less than the first signal quality threshold, and/or the maximum throughput of the first device is greater than the first throughput threshold, the first device may stop using the AI model 1. For another example, if the transmission delay that is of the signal from the second device and that is detected by the first device is greater than 80 ms, the first device may stop using the AI model 1. For still another example, if the packet error rate that is of the signal from the second device and that is detected by the first device and/or the call drop rate of the first device are/is greater than 20%, the first device may stop using the AI model 1.

The second application scenario condition includes: The application scenario of the first device is within a second application scenario range. The second application scenario range is different from the first application scenario range. For example, the first application scenario range includes the CSI-RS feedback enhancement, and the second application scenario range includes the beam management enhancement. The CSI-RS feedback enhancement may correspond to the AI model a1 and the AI model a2, and the beam management enhancement may correspond to the AI model a3 and the AI model a4. If the first AI model is the AI model a1, and the application scenario of the first device changes from the CSI-RS feedback enhancement to the beam management enhancement, the first device may stop using the AI model a1.

The third resource condition includes: The resource of the first device is within a third resource range. Optionally, when the first device is the terminal device, the second condition may include the third resource condition. The third resource range is different from the first resource range. For example, when a center frequency of a BWP used by the terminal device is a second frequency, and a bandwidth used by the terminal device is a second bandwidth, the terminal device may stop using the AI model b1.

The fourth resource condition includes: The resource of the second device is within a fourth resource range. Optionally, when the first device is the network device and the second device is the terminal device, the second condition may include the fourth resource condition. The fourth resource range may be the same as or different from the third resource range. For example, when a center frequency of a BWP used by the terminal device is a second frequency, and a bandwidth used by the terminal device is a second bandwidth, the network device may stop using the AI model b1.

The third area condition includes: The area in which the first device is located is within a third area range. Optionally, when the first device is the terminal device, the second condition may include the third area condition. The third area range is different from the first area range. For example, if the terminal device is located in a city B, the terminal device may stop using the AI model c1 corresponding to the city A. For another example, if the terminal device accesses a PLMN 2, the terminal device may stop using the AI model c2 corresponding to the PLMN 1. For still another example, if an identifier of a cell accessed by the terminal device is a CGI 2, the terminal device may stop using the AI model c3 corresponding to the CGI 1.

The fourth area condition includes: The area in which the second device is located is within a fourth area range. Optionally, when the first device is the network device and the second device is the terminal device, the second condition may include the fourth area condition. The fourth area range may be the same as or different from the third area range. For example, if the terminal device is located in the city B, the network device may stop using the AI model c1 corresponding to the city A. For another example, if the terminal device accesses the PLMN 2, the network device may stop using the AI model c2 corresponding to the PLMN 1. For still another example, if the identifier of the cell accessed by the terminal device is the CGI 2, the network device may stop using the AI model c3 corresponding to the CGI 1.

The second capability condition includes: The capability of the first device is within a second capability range. The second capability range is different from the first capability range. For example, the capability of the first device may include a remaining power of the first device. When the remaining power of the first device is greater than or equal to the first power threshold, the first device may stop using the AI model d1. For another example, the capability of the first device includes a computing capability of the first device. When a computing rate of the first device is greater than or equal to the first rate threshold, the first device may stop using the AI model d2.

The second performance condition includes: The performance of the first AI model is within a second performance range. The performance of the first AI model may include prediction accuracy of the first AI model and/or network performance obtained after network optimization is performed by using a prediction result of the first AI model. For example, when the prediction accuracy of the first AI model is less than a second accuracy threshold (for example, the prediction accuracy of the first AI model is less than 95% within 1 minute), the first device may stop using the first AI model. For another example, if results of K consecutive predictions of the first AI model are all inaccurate, where K is a positive integer, for example, in the beam management enhancement, if optimal beams predicted by the first AI model for five consecutive times are not actual optimal beams, the first device may stop using the first AI model. For still another example, when the network performance obtained after network optimization is performed by using the prediction result of the first AI model does not reach an expected performance objective, the first device may stop using the first AI model. For example, the expected performance objective is to increase the throughput of the first device to X. If the throughput of the first device is less than X after network optimization is performed by using the prediction result of the first AI model, the first device may stop using the first AI model.

According to the method, the second device may indicate the correspondence between the at least one exit condition and the at least one AI model to the first device. In this way, the first device may properly exit an AI model, so that efficiency of determining and using an AI model by the first device can be improved, and the first device can properly and effectively use the AI model, to improve efficiency of collaboration between the devices.

Optionally, the application scenario may be included in the at least one condition and the at least one exit condition, or may exist as independent information in the first information. For example, refer to Table 4. The first information may include an application scenario, a model list, a model sublist, a model ID, content information, at least one condition, at least one exit condition, and minimum execution time.

**Table 4**

| Application scenario | Model list | Model sublist | Model ID and content information | At least one condition | At least one exit condition | Minimum execution time |
|---|---|---|---|---|---|---|
| Beam management enhancement | 1 | 1-1, 1-2 | XXX, XXXX1, XXXX2 | Condition 1-1 | Condition 1-2 | 5 minutes |
| | 2 | 2-1, 2-2 | YYY, YYYY1, YYYY2 | Condition 2-1 | Condition 2-2 | 7 minutes |

An index 1 may indicate an AI model whose model ID is XXX, an index 1-1 may indicate an AI model whose model ID is XXXX1, and an index 1-2 may indicate an AI model whose model ID is XXXX2. The AI model whose model ID is XXXX1 and the AI model whose model ID is XXXX1 are subversions of the AI model whose model ID is XXX. An index 2 may indicate an AI model whose model ID is YYY, an index 2-1 may indicate an AI model whose model ID is YYYY1, and an index 2-2 may indicate an AI model whose model ID is YYYY2. The AI model whose model ID is YYYY1 and the AI model whose model ID is YYYY1 are subversions of the AI model whose model ID is YYY.

Optionally, the at least one condition in Table 4 may be split into two pieces of information, where one piece of information is an entry condition of the at least one AI model, and the other piece of information is a change condition of the at least one AI model.

S203: When the first device meets the first condition, the first device uses the first AI model corresponding to the first condition.

For specific content of S203, refer to the descriptions of a correspondence between the first condition and the first AI model. Details are not described herein again.

S204: When the first device meets the second condition, the first device stops using the first AI model, where the second condition is a condition that is in the at least one exit condition and that corresponds to the first AI model.

S204 is an optional step.

For specific content of S204, refer to the descriptions of a correspondence between the second condition and the first AI model. Details are not described herein again.

S205: When an AI model used by the first device changes, the first device sends second information to the second device. Correspondingly, the second device receives the second information from the first device.

The second information may indicate that the AI model used by the first device changes. That the AI model used by the first device changes may include at least one of the following: The first device changes from not using the AI model to using the AI model, the first device changes from using an AI model to using another AI model, and the first device changes from using the AI model to not using the AI model.

Optionally, the second information includes at least one of the following.
1. Time at which the AI model used by the first device changes, for example, when the first device changes from not using the AI model to using the AI model at 19:00, the second information includes 19:00.
2. A condition for triggering a change of the AI model used by the first device, for example, when the first device uses the first AI model because the first condition is met, the second information includes the first condition.
3. Network performance of the first device and/or AI model performance within first duration before the AI model used by the first device changes and/or within second duration after the AI model used by the first device changes, for example, information such as the throughput, the packet error rate, and/or the transmission delay of the first device within the first duration before the AI model used by the first device changes and/or within the second duration after the AI model used by the first device changes, and for another example, the first device changes from using an AI model 1-1 to using an AI model 2-2, and prediction accuracy of the AI model 1-1 within the first duration before the AI model used by the first device changes, and/or prediction accuracy of the AI model 2-2 within the second duration after the AI model used by the first device changes. The first duration and the second duration may be preset, or may be obtained by the first device from the second device.
4. Indication information of the AI model used by the first device before the AI model used by the first device changes and/or indication information of an AI model used by the first device after the AI model used by the first device changes, where the indication information may be an index of the AI model. For example, the first device changes from using the AI model 1-1 to using the AI model 2-2, and the second information includes an index of the AI model 1-1 and/or an index of the AI model 2-2.

The following describes S205 with reference to different scenarios.

Scenario 1: The first device is a terminal device 1, and the second device is a network device 1.

When the terminal device 1 is in a connected state, the terminal device 1 may send the second information to the network device 1 when an AI model changes. Alternatively, after an AI model changes for a plurality of times, the terminal device may send, to the network device 1, the second information indicating the plurality of changes, where the second information may be information indicating, in a list manner, indicating that the AI model changes for the plurality of times.

When the terminal device 1 is in a non-connected state, the terminal device 1 may store the second information. For example, the terminal device 1 may store the second information in a form of a list in a network self-optimization report. After the terminal device 1 enters the connected state, the terminal device 1 may send the second information to the network device 1. For example, the terminal device 1 sends the network self-optimization report including the second information to the network device 1. When entering the connected state, the terminal device 1 may be connected to the network device 1, or may be connected to another network device (for example, a network device 2). When the terminal device 1 is connected to the network device 1, the terminal device 1 may directly send the second information to the network device 1. When the terminal device 1 is connected to the network device 2, the terminal device 1 may send the second information to the network device 1 via the network device 2. Specifically, the terminal device 1 may send the second information to the network device 2, and then the network device 2 sends the second information to the network device 1.

Scenario 2: The first device is a network device 1, and the second device is a terminal device 1.

When the terminal device 1 is in a connected state, the network device 1 may send the second information to the terminal device 1 when an AI model changes. Alternatively, after an AI model changes for a plurality of times, the network device may send, to the terminal device 1, the second information indicating that the AI model changes for the plurality of times, where the second information may be information indicating, in a list manner, indicating that the AI model changes for the plurality of times. Optionally, the second information may be carried in an RRC message.

When the terminal device 1 is in a non-connected state, the network device 1 may store the second information. For example, the network device 1 may store the second information in a form of a list in context information of the terminal device 1. Alternatively, the network device 1 sends, to a core network, context information that is of the terminal device 1 and that includes the second information. After the terminal device 1 enters the connected state, a network device accessed by the terminal device 1 may obtain the second information from the network device 1 or the core network, and send the second information to the terminal device 1.

Optionally, after receiving the second information, the second device may optimize a configuration of the AI model in the first device based on the second information. For example, if performance of the first device deteriorates or is not improved (for example, a transmission delay of the first device increases) after the first device is switched from an AI model 1 to an AI model 2, the second device may modify a condition for switching from the AI model 1 to the AI model 2, to increase difficulty of switching the first device from the AI model 1 to the AI model 2. Assuming that before the second information is received, a condition a for switching from the AI model 1 to the AI model 2 includes: the transmission delay that is of the signal from the second device and that is detected by the first device is greater than 80 ms, after receiving the second information, the second device may modify the condition a for switching from the AI model 1 to the AI model 2 to a condition b, where the condition b includes: the transmission delay that is of the signal from the second device and that is detected by the first device is greater than or equal to 40 ms and less than or equal to 60 ms. According to the method, the second device may properly set a correspondence between a condition and an AI model based on the second information fed back by the first device, so that the first device properly selects and uses an AI model, to improve system performance.

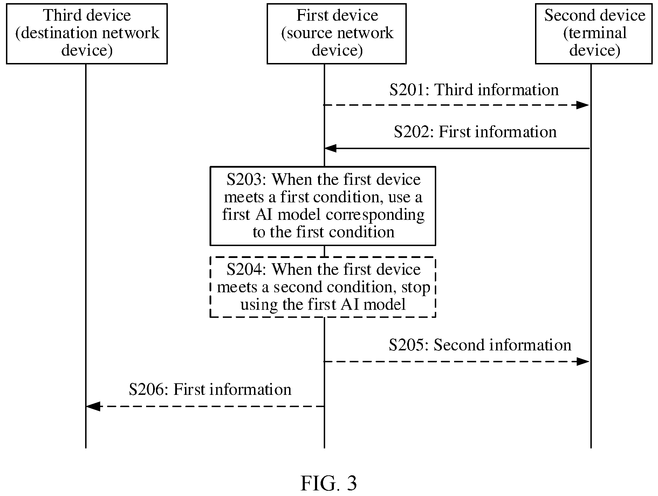

Optionally, when the first device is the network device, and the second device is the terminal device, as shown in FIG. 3, the method shown in FIG. 2 may further include the following steps.

S206: When the second device is handed over from the first device to a third device, the first device sends the first information to the third device.

The first device may be a source network device of the terminal device, and the third device may be a destination network device of the terminal device. In other words, when the terminal device is handed over from the source network device to the destination network device, the source network device may send the first information from the terminal device to the destination network device.

The first information may be carried in an existing message, or may be carried in a new message.

According to the method, when the terminal device is handed over from the source network device to the destination network device, the source network device may send the first information from the terminal device to the destination network device. In this way, the destination network device may also use an AI model based on a correspondence between a condition and an AI model provided by the terminal device.

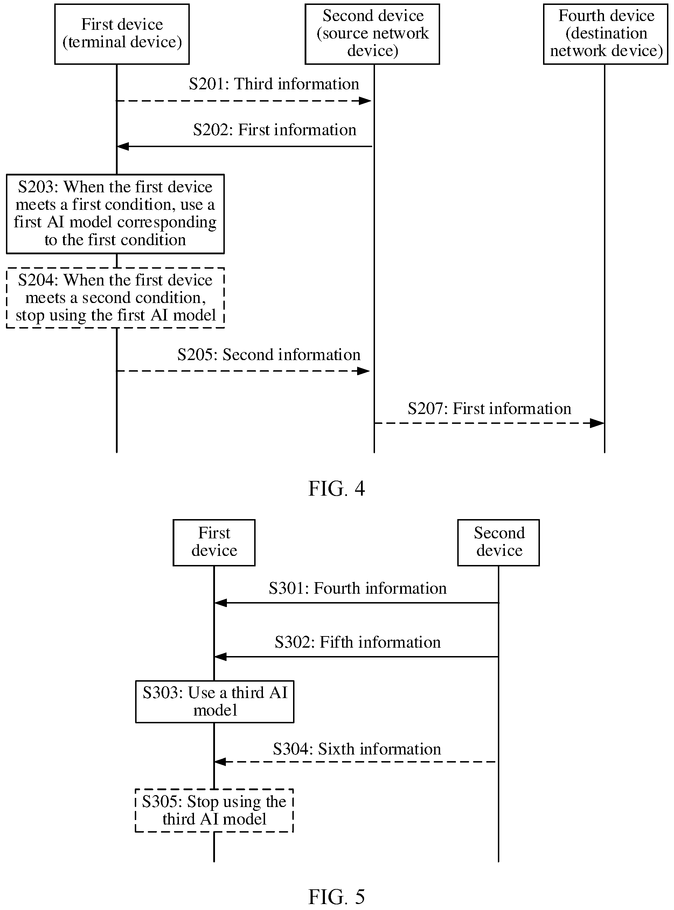

Optionally, when the first device is the terminal device, and the second device is the network device, as shown in FIG. 4, the method shown in FIG. 2 further includes the following steps.

S207: When the first device is handed over from the second device to a fourth device, the second device sends the first information to the fourth device.

The second device may be a source network device of the terminal device, and the fourth device may be a destination network device of the terminal device. In other words, when the terminal device is handed over from the source network device to the destination network device, the source network device may send the first information to the destination network device.

The first information may be carried in an existing message, or may be carried in a new message.

According to the method, when the terminal device is handed over from the source network device to the destination network device, the source network device may send the first information to the destination network device. In this way, the destination network device may also obtain a correspondence between a condition and an AI model provided by the source network device, so that the destination network device may cooperate with the terminal device that performs an operation by using the correspondence.

To resolve the technical problems, an embodiment of this application provides a communication method. The method may be applied to the communication system shown in FIG. 1. The following specifically describes a procedure of the method with reference to a flowchart shown in FIG. 5.

S301: A second device sends fourth information to a first device. Correspondingly, the first device receives the fourth information from the second device.

Optionally, the first device is a terminal device, and the second device is a network device; or the first device is a network device, and the second device is a terminal device.

The fourth information may include configuration information of at least one AI model. For specific content of the configuration information of the at least one AI model, refer to S202. Details are not described herein again.

The fourth information may be carried in an existing message, or may be carried in a new message.

S302: The second device sends fifth information to the first device. Correspondingly, the first device receives the fifth information from the second device.

The fifth information may include indication information of a third AI model, and the third AI model is one of the at least one AI model. The fifth information indicates the first device to use the third AI model or switch from another AI model to the third AI model.

Optionally, the indication information of the third AI model may be an index of the third AI model. For specific content of the index of the third AI model, refer to the descriptions of the index of the first AI model in S202. Details are not described herein again.

For example, a correspondence among a model list, a model sublist, and a model ID may be shown in Table 4. When sending the index 1 to the first device, the second device may indicate the first device to use the AI model whose model ID is XXX in the beam management enhancement scenario. When sending the index 1-1 to the first device, the second device may indicate the first device to use the model whose model ID is XXXX1 in the beam management enhancement scenario.

According to the method, an AI model is indicated by using an index of the AI model. In this way, even if a third party obtains an index, the third party does not know an AI model corresponding to the index, to improve security.

A manner of sending the fifth information is not limited in this application. For example, the fifth information may be carried in an RRC message, a MAC control element (MAC control element, MAC CE), downlink control information (downlink control Information, DCI), or uplink control information (uplink control information, UCI).

S303. The first device uses the third AI model.

S304: The second device sends sixth information to the first device. Correspondingly, the first device receives the sixth information from the second device.

The sixth information may include the indication information of the third AI model. The sixth information may indicate the first device to stop using the third AI device. For specific content of the indication information of the third AI model, refer to S302. Details are not described herein again.

A manner of sending the sixth information is not limited in this application. For example, the sixth information may be carried in an RRC message, a MAC CE, DCI, or UCI.

S305: The first device stops using the third AI model.

S304 and S305 are optional steps.

According to the method, after sending the configuration information of the at least one AI model to the first device, the second device may indicate, by using the indication information of the third AI model, the first device to use the third AI model or stop using the third AI model. Therefore, overheads and time needed for indicating the first device to use the third AI model or stop using the third AI model can be reduced, and efficiency of collaboration between the devices can be further improved.

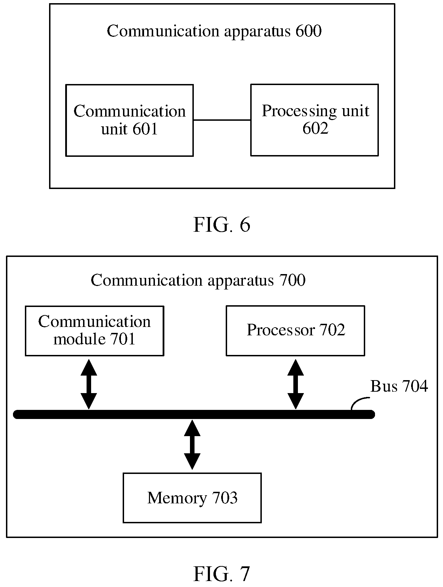

Based on a same technical concept as the method embodiments in FIG. 2 to FIG. 5, an embodiment of this application provides a communication apparatus in FIG. 6, and the communication apparatus may be configured to perform functions of related steps in the foregoing method embodiments. The function may be implemented by hardware, or may be implemented by software or by hardware executing corresponding software. The hardware or the software includes one or more modules corresponding to the foregoing function. A structure of the communication apparatus is shown in FIG. 6, and includes a communication unit 601 and a processing unit 602. The communication apparatus 600 may be used in a network device (for example, the gNB in FIG. 1) or a terminal device, and may implement the communication method provided in the foregoing embodiments and examples of this application. Functions of the units in the communication apparatus 600 are described below.

The communication unit 601 is configured to receive and send data. The communication unit 601 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 602 may be configured to support the communication apparatus 600 in performing processing actions in the foregoing method embodiments. The processing unit 602 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

In an implementation, the communication apparatus 600 is used in the first device in the embodiment of this application shown in FIG. 2 or FIG. 3. The first device may be the network device (for example, the gNB in FIG. 1) or the terminal device. The following describes a specific function of the processing unit 602 in this implementation.

The processing unit 602 is configured to receive first information from a second device through the communication unit 601, where the first information indicates a correspondence between at least one condition and at least one AI model; and when the first device meets a first condition, use a first AI model corresponding to the first condition, where the first condition is any one of the at least one condition.

Optionally, the first condition includes at least one of the following:
signal quality of the first device meets a first signal quality condition;
an application scenario of the first device meets a first application scenario condition;
a resource of the first device meets a first resource condition;
a resource of the second device served by the first device meets a second resource condition;
an area in which the first device is located meets a first area condition;
an area in which the second device served by the first device is located meets a second area condition;
a capability of the first device meets a first capability condition; and
performance of a second AI model currently used by the first device meets a first performance condition.

Optionally, the first signal quality condition includes: the signal quality of the first device is within a first signal quality range;
the first application scenario condition includes: the application scenario of the first device is within a first application scenario range;
the first resource condition includes: the resource of the first device is within a first resource range;
the second resource condition includes: the resource of the second device is within a second resource range;
the first area condition includes: the area in which the first device is located is within a first area range;
the second area condition includes: the area in which the second device is located is within a second area range;
the first capability condition includes: the capability of the first device is within a first capability range; and/or
the first performance condition includes: the performance of the second AI model is within a first performance range.

Optionally, the first information further indicates a correspondence between at least one exit condition and the at least one AI model. The processing unit 602 is specifically configured to: after using the first AI model corresponding to the first condition, when the first device meets a second condition, stop using the first AI model, where the second condition is a condition that is in the at least one exit condition and that corresponds to the first AI model.

Optionally, the second condition includes at least one of the following:
the signal quality of the first device meets a second signal quality condition;
the application scenario of the first device meets a second application scenario condition;
the resource of the first device meets a third resource condition;
the resource of the second device served by the first device meets a fourth resource condition;
the area in which the first device is located meets a third area condition;
the area in which the second device served by the first device is located meets a fourth area condition;
the capability of the first device meets a second capability condition; and
performance of the first AI model meets a second performance condition.

Optionally, the second signal quality condition includes: the signal quality of the first device is within a second signal quality range;
the second application scenario condition includes: the application scenario of the first device is within a second application scenario range;
the third resource condition includes: the resource of the first device is within a third resource range;
the fourth resource condition includes: the resource of the second device is within a fourth resource range;
the third area condition includes: the area in which the first device is located is within a third area range;
the fourth area condition includes: the area in which the second device is located is within a fourth area range;
the second capability condition includes: the capability of the first device is within a second capability range; and/or
the second performance condition includes: the performance of the first AI model is within a second performance range.

Optionally, the processing unit 602 is specifically configured to: when an AI model used by the first device changes, send second information to the second device through the communication unit 601, where the second information indicates that the AI model used by the first device changes.

Optionally, the second information includes at least one of the following.
time at which the AI model used by the first device changes;
a condition for triggering a change of the AI model used by the first device;
network performance of the first device and/or AI model performance within first duration before the AI model used by the first device changes and/or within second duration after the AI model used by the first device changes; and
indication information of the AI model used by the first device before the AI model used by the first device changes and/or indication information of an AI model used by the first device after the AI model used by the first device changes.

Optionally, the first device is a terminal device, and the second device is a network device; or
the first device is a network device, and the second device is a terminal device.

Optionally, when the first device is the network device, the processing unit 602 is specifically configured to: when the second device is handed over from the first device to a third device, send the first information to the third device through the communication unit 601.

Optionally, the processing unit 602 is specifically configured to: before receiving the first information from the second device, send third information to the second device through the communication unit 601, where the third information indicates the capability of the first device and/or the application scenario of the first device, and the third information is used to determine the first information.

In another implementation, the communication apparatus 600 is used in the second device in the embodiment of this application shown in FIG. 2 or FIG. 4. The second device may be the network device (for example, the gNB in FIG. 1) or the terminal device. The following describes a specific function of the processing unit 602 in this implementation.

The processing unit 602 is configured to obtain first information, where the first information indicates a correspondence between at least one condition and at least one AI model; and send the first information to a first device through the communication unit 601.

Optionally, any one of the at least one condition includes at least one of the following:
signal quality of the first device meets a first signal quality condition;
an application scenario of the first device meets a first application scenario condition;
a resource of the first device meets a first resource condition;
a resource of the second device served by the first device meets a second resource condition;
an area in which the first device is located meets a first area condition;
an area in which the second device served by the first device is located meets a second area condition;
a capability of the first device meets a first capability condition; and
performance of a second AI model currently used by the first device meets a first performance condition.

Optionally, the first signal quality condition includes: the signal quality of the first device is within a first signal quality range;
the first application scenario condition includes: the application scenario of the first device is within a first application scenario range;
the first resource condition includes: the resource of the first device is within a first resource range;
the second resource condition includes: the resource of the second device is within a second resource range;
the first area condition includes: the area in which the first device is located is within a first area range;
the second area condition includes: the area in which the second device is located is within a second area range;
the first capability condition includes: the capability of the first device is within a first capability range; and/or
the first performance condition includes: the performance of the second AI model is within a first performance range.

Optionally, the first information further indicates a correspondence between at least one exit condition and the at least one AI model.

Optionally, a second condition is one of the at least one exit condition, and the second condition includes at least one of the following:
the signal quality of the first device meets a second signal quality condition;
the application scenario of the first device meets a second application scenario condition;
the resource of the first device meets a third resource condition;
the resource of the second device served by the first device meets a fourth resource condition;
the area in which the first device is located meets a third area condition;
the area in which the second device served by the first device is located meets a fourth area condition;
the capability of the first device meets a second capability condition; and
performance of the first AI model meets a second performance condition.

Optionally, the second signal quality condition includes: the signal quality of the first device is within a second signal quality range;
the second application scenario condition includes: the application scenario of the first device is within a second application scenario range;
the third resource condition includes: the resource of the first device is within a third resource range;
the fourth resource condition includes: the resource of the second device is within a fourth resource range;
the third area condition includes: the area in which the first device is located is within a third area range;
the fourth area condition includes: the area in which the second device is located is within a fourth area range;
the second capability condition includes: the capability of the first device is within a second capability range; and/or
the second performance condition includes: the performance of the first AI model is within a second performance range.

Optionally, the processing unit 602 is specifically configured to receive second information from the first device through the communication unit 601, where the second information indicates that an AI model used by the first device changes.

Optionally, the second information includes at least one of the following:
time at which the AI model used by the first device changes;
a condition for triggering a change of the AI model used by the first device;
network performance of the first device and/or AI model performance within first duration before the AI model used by the first device changes and/or within second duration after the AI model used by the first device changes; and
indication information of the AI model used by the first device before the AI model used by the first device changes and/or indication information of an AI model used by the first device after the AI model used by the first device changes.

Optionally, the first device is a terminal device, and the second device is a network device; or
the first device is a network device, and the second device is a terminal device.

Optionally, when the second device is the network device, the processing unit 602 is specifically configured to: when the first device is handed over from the second device to a fourth device, send the first information to the fourth device through the communication unit 601.

Optionally, the processing unit 602 is specifically configured to: before obtaining the first information, receive third information from the first device through the communication unit 601, where the third information indicates the capability of the first device and/or the application scenario of the first device, and the third information is used to determine the first information.

In still another implementation, the communication apparatus 600 is used in the first device in the embodiment of this application shown in FIG. 5. The first device may be the network device (for example, the gNB in FIG. 1) or the terminal device. The following describes a specific function of the processing unit 602 in this implementation.

The processing unit 602 is configured to receive fourth information from a second device through the communication unit 601, where the fourth information includes configuration information of at least one artificial intelligence AI model; receive fifth information from the second device through the communication unit 601, where the fifth information includes indication information of a third AI model, and the third AI model is one of the at least one AI model; and use the third AI model.

Optionally, the indication information of the third AI model is an index of the third AI model.

In yet another implementation, the communication apparatus 600 is used in the second device in the embodiment of this application shown in FIG. 5. The second device may be the network device (for example, the gNB in FIG. 1) or the terminal device. The following describes a specific function of the processing unit 602 in this implementation.

The processing unit 602 is configured to send fourth information to a first device through the communication unit 601, where the fourth information includes configuration information of at least one artificial intelligence AI model; and send fifth information to the first device through the communication unit 601, where the fifth information includes indication information of a third AI model, the third AI model is one of the at least one AI model, and the fifth information indicates the first device to use the third AI model.

Optionally, the indication information of the third AI model is an index of the third AI model.

It should be noted that, in the foregoing embodiments of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) or a processor to perform all or a part of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 7, and the communication apparatus may be configured to perform related steps in the foregoing method embodiments. The communication apparatus may be used in the network device (for example, the gNB in FIG. 1) or the terminal device, may implement the communication method provided in the foregoing embodiments and examples of this application, and has a function of the communication apparatus shown in FIG. 6. Refer to FIG. 7. The communication apparatus 700 includes a communication module 701, a processor 702, and a memory 703. The communication module 701, the processor 702, and the memory 703 are connected to each other.

Optionally, the communication module 701, the processor 702, and the memory 703 are connected to each other through a bus 704. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 7, but this does not mean that there is only one bus or only one type of bus.

The communication module 701 is configured to receive and send data, to implement communication interaction with another device. For example, the communication module 701 may be implemented by using a physical interface, a communication module, a communication interface, or an input/output interface.

The processor 702 may be configured to support the communication apparatus 700 in performing processing actions in the foregoing method embodiments. When the communication apparatus 700 is configured to implement the foregoing method embodiments, the processor 702 may be further configured to implement functions of the foregoing processing unit 602. The processor 702 may be a CPU, or may be another general-purpose processor, a DSP, an ASIC, an FPGA or another programmable logic device, a transistor logic device, a hardware component, or any combination thereof. The general-purpose processor may be a microprocessor or any regular processor.

In an implementation, the communication apparatus 700 is used in the first device in the embodiment of this application shown in FIG. 2 or FIG. 3. The processor 702 is specifically configured to: receive first information from a second device through the communication module 701, where the first information indicates a correspondence between at least one condition and at least one AI model; and when the first device meets a first condition, use a first AI model corresponding to the first condition, where the first condition is any one of the at least one condition.

In another implementation, the communication apparatus 700 is used in the second device in the embodiment of this application shown in FIG. 2 or FIG. 4. The processor 702 is specifically configured to: obtain first information, where the first information indicates a correspondence between at least one condition and at least one AI model; and send the first information to a first device through the communication module 701.

In still another implementation, the communication apparatus 700 is used in the first device in the embodiment of this application shown in FIG. 5. The processor 702 is specifically configured to: receive fourth information from a second device through the communication module 701, where the fourth information includes configuration information of at least one artificial intelligence AI model; receive fifth information from the second device through the communication module 701, where the fifth information includes indication information of a third AI model, and the third AI model is one of the at least one AI model; and use the third AI model.

In yet another implementation, the communication apparatus 700 is used in the second device in the embodiment of this application shown in FIG. 5. The processor 702 is specifically configured to: send fourth information to a first device through the communication module 701, where the fourth information includes configuration information of at least one artificial intelligence AI model; and send fifth information to the first device through the communication module 701, where the fifth information includes indication information of a third AI model, the third AI model is one of the at least one AI model, and the fifth information indicates the first device to use the third AI model.

For a specific function of the processor 702, refer to the descriptions in the communication method provided in the foregoing embodiments and examples of this application, and the specific function descriptions of the communication apparatus 600 in the embodiment of this application shown in FIG. 6. Details are not described herein again.

The memory 703 is configured to store program instructions, data, and the like. Specifically, the program instructions may include program code, and the program code includes computer operation instructions. The memory 703 may include a RAM, and may further include a non-volatile memory (non-volatile memory), for example, at least one magnetic disk memory. The processor 702 executes the program instructions stored in the memory 703, and uses the data stored in the memory 703, to implement the foregoing function, so as to implement the communication method provided in the foregoing embodiments of this application.

It may be understood that the memory 703 in FIG. 7 in this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method and apparatus. In the method, a first device may receive first information from a second device. The first information may indicate a correspondence between at least one condition and at least one AI model. When the first device meets a first condition, the first device may use a first AI model corresponding to the first condition, where the first condition is any one of the at least one condition. According to the method, the first device may select a to-be-used AI model based on the correspondence between the at least one condition and the at least one AI model indicated by the second device, so that efficiency of determining and using the AI model by the first device can be improved, and the first device can properly and effectively use the AI model, to improve efficiency of collaboration between the devices.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a first device, and comprising:
receiving first information from a second device, wherein the first information indicates a correspondence between at least one condition and at least one artificial intelligence AI model; and
when the first device meets a first condition, using a first AI model corresponding to the first condition, wherein the first condition is any one of the at least one condition.

2. The method according to claim 1, wherein the first condition comprises at least one of the following:
signal quality of the first device meets a first signal quality condition;
an application scenario of the first device meets a first application scenario condition;
a resource of the first device meets a first resource condition;
a resource of the second device served by the first device meets a second resource condition;
an area in which the first device is located meets a first area condition;
an area in which the second device served by the first device is located meets a second area condition;
a capability of the first device meets a first capability condition; and
performance of a second AI model currently used by the first device meets a first performance condition.

3. The method according to claim 2, wherein the first signal quality condition comprises: the signal quality of the first device is within a first signal quality range;
the first application scenario condition comprises: the application scenario of the first device is within a first application scenario range;
the first resource condition comprises: the resource of the first device is within a first resource range;
the second resource condition comprises: the resource of the second device is within a second resource range;
the first area condition comprises: the area in which the first device is located is within a first area range;
the second area condition comprises: the area in which the second device is located is within a second area range;
the first capability condition comprises: the capability of the first device is within a first capability range; and/or
the first performance condition comprises: the performance of the second AI model is within a first performance range.

4. The method according to any one of claims 1 to 3, wherein the first information further indicates a correspondence between at least one exit condition and the at least one AI model, and after using the first AI model corresponding to the first condition, the method further comprises:
when the first device meets a second condition, stopping using the first AI model, wherein the second condition is a condition that is in the at least one exit condition and that corresponds to the first AI model.

5. The method according to claim 4, wherein the second condition comprises at least one of the following:
the signal quality of the first device meets a second signal quality condition;
the application scenario of the first device meets a second application scenario condition;
the resource of the first device meets a third resource condition;
the resource of the second device served by the first device meets a fourth resource condition;
the area in which the first device is located meets a third area condition;
the area in which the second device served by the first device is located meets a fourth area condition;
the capability of the first device meets a second capability condition; and
performance of the first AI model meets a second performance condition.

6. The method according to claim 5, wherein the second signal quality condition comprises: the signal quality of the first device is within a second signal quality range;
the second application scenario condition comprises: the application scenario of the first device is within a second application scenario range;
the third resource condition comprises: the resource of the first device is within a third resource range;
the fourth resource condition comprises: the resource of the second device is within a fourth resource range;
the third area condition comprises: the area in which the first device is located is within a third area range;
the fourth area condition comprises: the area in which the second device is located is within a fourth area range;
the second capability condition comprises: the capability of the first device is within a second capability range; and/or
the second performance condition comprises: the performance of the first AI model is within a second performance range.

7. The method according to any one of claims 1 to 6, further comprising:
when an AI model used by the first device changes, sending second information to the second device, wherein the second information indicates that the AI model used by the first device changes.

8. The method according to claim 7, wherein the second information comprises at least one of the following:
time at which the AI model used by the first device changes;
a condition for triggering a change of the AI model used by the first device;
network performance of the first device and/or AI model performance within first duration before the AI model used by the first device changes and/or within second duration after the AI model used by the first device changes; and
indication information of the AI model used by the first device before the AI model used by the first device changes and/or indication information of an AI model used by the first device after the AI model used by the first device changes.

9. The method according to any one of claims 1 to 8, wherein the first device is a terminal device, and the second device is a network device; or
the first device is a network device, and the second device is a terminal device.

10. The method according to claim 9, wherein when the first device is the network device, the method further comprises:
sending, when the second device is handed over from the first device to a third device, the first information to the third device.

11. The method according to any one of claims 1 to 10, wherein before receiving the first information from the second device, the method further comprises:
sending third information to the second device, wherein the third information indicates the capability of the first device and/or the application scenario of the first device, and the third information is used to determine the first information.

12. A communication method, applied to a second device, and comprising:
obtaining first information, wherein the first information indicates a correspondence between at least one condition and at least one artificial intelligence AI model; and
sending the first information to a first device.

13. The method according to claim 12, wherein any one of the at least one condition comprises at least one of the following:
signal quality of the first device meets a first signal quality condition;
an application scenario of the first device meets a first application scenario condition;
a resource of the first device meets a first resource condition;
a resource of the second device served by the first device meets a second resource condition;
an area in which the first device is located meets a first area condition;
an area in which the second device served by the first device is located meets a second area condition;
a capability of the first device meets a first capability condition; and
performance of a second AI model currently used by the first device meets a first performance condition.

14. The method according to claim 13, wherein the first signal quality condition comprises: the signal quality of the first device is within a first signal quality range;
the first application scenario condition comprises: the application scenario of the first device is within a first application scenario range;
the first resource condition comprises: the resource of the first device is within a first resource range;
the second resource condition comprises: the resource of the second device is within a second resource range;
the first area condition comprises: the area in which the first device is located is within a first area range;
the second area condition comprises: the area in which the second device is located is within a second area range;
the first capability condition comprises: the capability of the first device is within a first capability range; and/or
the first performance condition comprises: the performance of the second AI model is within a first performance range.

15. The method according to any one of claims 12 to 14, wherein the first information further indicates a correspondence between at least one exit condition and the at least one AI model.

16. The method according to claim 15, wherein a second condition is one of the at least one exit condition, and the second condition comprises at least one of the following:
the signal quality of the first device meets a second signal quality condition;
the application scenario of the first device meets a second application scenario condition;
the resource of the first device meets a third resource condition;
the resource of the second device served by the first device meets a fourth resource condition;
the area in which the first device is located meets a third area condition;
the area in which the second device served by the first device is located meets a fourth area condition;
the capability of the first device meets a second capability condition; and
performance of the first AI model meets a second performance condition.

17. The method according to claim 16, wherein the second signal quality condition comprises:
the signal quality of the first device is within a second signal quality range;
the second application scenario condition comprises: the application scenario of the first device is within a second application scenario range;
the third resource condition comprises: the resource of the first device is within a third resource range;
the fourth resource condition comprises: the resource of the second device is within a fourth resource range;
the third area condition comprises: the area in which the first device is located is within a third area range;
the fourth area condition comprises: the area in which the second device is located is within a fourth area range;
the second capability condition comprises: the capability of the first device is within a second capability range; and/or
the second performance condition comprises: the performance of the first AI model is within a second performance range.

18. The method according to any one of claims 12 to 17, further comprising:
receiving second information from the first device, wherein the second information indicates that an AI model used by the first device changes.

19. The method according to claim 18, wherein the second information comprises at least one of the following:
time at which the AI model used by the first device changes;
a condition for triggering a change of the AI model used by the first device;
network performance of the first device and/or AI model performance within first duration before the AI model used by the first device changes and/or within second duration after the AI model used by the first device changes; and
indication information of the AI model used by the first device before the AI model used by the first device changes and/or indication information of an AI model used by the first device after the AI model used by the first device changes.

20. The method according to any one of claims 12 to 19, wherein the first device is a terminal device, and the second device is a network device; or
the first device is a network device, and the second device is a terminal device.

21. The method according to claim 20, wherein when the second device is the network device, the method further comprises:
sending, when the first device is handed over from the second device to a fourth device, the first information to the fourth device.

22. The method according to any one of claims 12 to 21, wherein before obtaining the first information, the method further comprises:
receiving third information from the first device, wherein the third information indicates the capability of the first device and/or the application scenario of the first device, and the third information is used to determine the first information.

23. A communication method, applied to a first device, and comprising:
receiving fourth information from a second device, wherein the fourth information comprises configuration information of at least one artificial intelligence AI model;
receiving fifth information from the second device, wherein the fifth information comprises indication information of a third AI model, and the third AI model is one of the at least one AI model; and
using the third AI model.

24. The method according to claim 23, wherein the indication information of the third AI model is an index of the third AI model.

25. A communication method, applied to a second device, and comprising:
sending fourth information to a first device, wherein the fourth information comprises configuration information of at least one artificial intelligence AI model; and
sending fifth information to the first device, wherein the fifth information comprises indication information of a third AI model, the third AI model is one of the at least one AI model, and the fifth information indicates the first device to use the third AI model.

26. The method according to claim 25, wherein the indication information of the third AI model is an index of the third AI model.

27. A communication apparatus, comprising:
a communication unit, configured to receive and send data; and
a processing unit, configured to perform the method according to any one of claims 1 to 26 through the communication unit.

28. A computer-readable storage medium, wherein the computer-readable storage medium stores a computer program, and when the computer program is run on a computer, the computer is enabled to perform the method according to any one of claims 1 to 26.

29. A chip, wherein the chip is coupled to a memory, and the chip reads a computer program stored in the memory, to perform the method according to any one of claims 1 to 26.
